Europäisches Patentamt

European Patent Office

Office européen des brevets

(11) Numéro de publication: **0 262 041**
A2

# (12) DEMANDE DE BREVET EUROPEEN

(21) Numéro de dépôt: 87402102.5

(22) Date de dépôt: 21.09.87

(51) Int. Cl.⁴: **C 04 B 35/46**
H 01 B 3/12, H 01 G 4/12

(30) Priorité: 26.09.86 FR 8613484

(43) Date de publication de la demande:
30.03.88  Bulletin  88/13

(84) Etats contractants désignés: **DE GB IT NL**

(71) Demandeur: **COMPAGNIE EUROPEENNE DE COMPOSANTS ELECTRONIQUES LCC**
**50, rue Jean -Pierre Timbaud B.P. 301**
**F-92402 Courbevoie (FR)**

(72) Inventeur: **Beauger, Alain**
**THOMSON-CSF SCPI 19, avenue de Messine**
**F-75008 Paris (FR)**

**Rossello, Alain**
**THOMSON-CSF SCPI 19, avenue de Messine**
**F-75008 Paris (FR)**

**Schneider, Claude**
**THOMSON-CSF SCPI 19, avenue de Messine**
**F-75008 Paris (FR)**

(74) Mandataire: **Ruellan-Lemonnier, Brigitte et al**
**THOMSON-CSF SCPI 19, avenue de Messine**
**F-75008 Paris (FR)**

(54) Composition diélectrique de type I à base de titanate de néodyme.

(57) La présente invention concerne une composition diélectrique de type I à base de titanate de néodyme constituée d'un mélange comportant 58 à 70% en poids de titanate de néodyme ($Nd_2O_3-3TiO_2$) 10 à 21 % en poids de titanate de plomb ($PbTiO_3$), 5 à 14 % en poids de titanate de baryum ($BaTiO_3$), 4 à 15 % en poids de zirconate de baryum ($BaZrO_3$) et 0, 2 à 1,2 % en poids d'oxyde d'yttrium ($Y_2O_3$).
Application à la fabrication de condensateurs.

EP 0 262 041 A2

**Description**

COMPOSITION DIELECTRIQUE DE TYPE I A BASE DE TITANATE DE NEODYME

La présente invention concerne des compositions diélectriques de type I frittant à haute température, plus particulièrement des compositions diélectriques de type I à base de titanate de néodyme.

Les compositions diélectriques présentant des propriétés intéressantes pour la réalisation de condensateurs ont été classées en fonction de différents critères tels que leur coefficient de température (défini comme étant le produit de la variation relative de capacité par l'inverse de la variation en température $\alpha =$     $\times$     ) et leur constante diélectrique. Ainsi, les compositions diélectriques de type I sont celles présentant une faible constante diélectrique comprise notamment entre 10 et 90.

Il est connu de réaliser des compositions diélectriques de type I présentant notamment un coefficient de température de la constante diélectrique pratiquement nul dans une large gamme de température ainsi que de très faibles pertes diélectriques (en général inférieures à $6.10^{-4}$) sous des fréquences élevées supérieures à 1 MHz et sur une large gamme de température comprise entre - 55°C et + 125°C, en utilisant entre autres du titanate de plomb et du titanate de néodyme. Ce type de composition est en général utilisé pour réaliser des condensateurs céramique soit sous forme de disque, soit sous forme multicouche. Or, les condensateurs céramique multicouches sont en général fabriqués en coulant ou en formant des couches de diélectrique, en déposant des électrodes métalliques conductrices sur les couches isolantes, en empilant les éléments qui en résultent pour former un condensateur multicouche et en frittant le matériau à température élevée pour le densifier et former une structure solide.

Les condensateurs céramique multicouches ont des applications diverses et il est connu de l'homme de l'art que la présence de bismuth dans une composition céramique diélectrique de type I ne permet pas l'utilisation de tels condensateurs à fréquences élevées. Il est par conséquent indispensable d'éliminer le bismuth, qui présentait cependant l'avantage de diminuer les températures de frittage d'une céramique, de toute composition diélectrique de type I.

La présente invention a donc pour but de remédier à ces inconvénients en proposant une nouvelle composition diélectrique de type I frittant à haute température, cette composition étant choisi parmi le diagramme :

$Nd_2O_3$. $3TiO_2$ - $PbTiO_3$ - $BaTiO_3$ - $BaZrO_3$

et tout en conservant les performances des condensateurs utilisant des compositions diélectriques de type I. Ces performances sont, pour une fréquence de 1 MHz, les suivantes :
- une constante diélectrique comprise entre 75 et 85,
- des tangentes de l'angle de pertes de 4 à $8.10^{-4}$ et stables en haute fréquence,
- un coefficient de température $\alpha$ variant de 0 à $\pm 30$ ppm correspondant à la classe NPO

La présente invention a donc pour objet une composition diélectrique de type I à base de titanate de néodyme, caractérisée en ce qu'elle est constituée d'un mélange comportant 58 à 70 % en poids de titanate de néodyme, 10 à 21 % en poids de titanate de plomb, 5 à 14 % en poids de titanate de baryum, 4 à 15 % en poids de zirconate de baryum et 0,2 à 1,2 % en poids d'oxyde d'yttrium.

Ces compositions céramiques diélectriques sont stables en température (variation de 0 à $\pm$ 30 ppm) et conduisent à de fortes constantes diélectriques associées à de faibles tangentes de l'angle de perte. Les températures de frittage de telles compositions sont comprises entre 1280°C et 1300°C ce qui permet l'utilisation d'électrodes en alliage palladium-argent à raison de 70 % en poids de palladium pour 30 % en poids d'argent lors de la réalisation de condensateurs céramique multicouches.

Les compositions céramiques sont préparées suivant la méthode bien connue de l'homme de l'art par pesée et mélange des matières premières afin d'obtenir une mixture suffisamment homogène pour permettre une réaction complète des éléments lors du frittage.

La présente invention sera mieux comprise à l'aide des exemples ci-après donnés à titre non limitatif.


Exemple I

On décrira en détail la préparation d'une composition particulière étant entendu que les suivantes seront réalisées de manière identique. Cette composition portera la désignation A. Les matières premières utilisées sont employées couramment en fabrication et ne sont pas choisies spécialement en vue de l'application à une composition diélectrique de type I.

On mélange, dans des récipients en polyéthylène contenant 200 grammes de billes de zircone, 100 cm³ d'eau désionisée et une quantité de poudre variant entre 50 et 60 g et ayant la composition suivante, les pourcentages se rapportant au poids total de poudre :
- titanate de néodyme     $Nd_2O_3$-$3TiO_2$     64,08 %
- titanate de plomb     $PbTiO_3$     11,65 %
- titanate de baryum     Ba Ti O₃     12,62 %
- zirconate de baryum     $BaZrO_3$     10,68 %
- oxyde d'yttrium     $Y_2O_3$     0,97 %

L'ensemble des constituants est mélangé pendant 2 heures. La barbotine obtenue, après incorporation d'un liant, est séchée et la poudre tamisée. Des disques d'apaisseur 1 mm et de diamètre 8,4 millimètres sont pressés. Le frittage est effectué dans un four en atmosphère oxydante à des températures comprises entre 1280 et 1300°C. Après le dépôt d'électrodes en argent sur les deux faces, les condensateurs sont testés électriquement.

Le tableau I regroupe la densité d de la céramique, la constante diélectrique ε mesurée à 20°C et à 1 MHz, le facteur de pertes tg δ mesuré à 20°C et 1 MHz, le coefficient de température £ et le facteur de pertes pour des fréquences de 1 kHz et 100 Hz.

| d | | 5,49 |
|---|---|---|
| $\mathcal{E}$ | | 77,6 |
| tg $\delta$ | à 1 MHz | $4.10^{-4}$ |
| $\alpha$ | | -4 |
| tg $\delta$ | à 1 kHz | $12.10^{-4}$ |
| | à 100 Hz | $10.10^{-4}$ |

TABLEAU I

On peut constater que le diélectrique selon l'invention ainsi que les condensateurs réalisés à partir de ce diélectrique possèdent de bonnes propriétés et correspondent en particulier à une classe NPO.

Exemple II

On prépare dans les mêmes conditions que précédemment six mélanges dont les proportions en poids sont données dans le tableau II.

| Composition | B | C | D | E | F | G |
|---|---|---|---|---|---|---|
| $PbTiO_3$ | 17,977 | 17,20 | 16,495 | 15,84 | 15,236 | 14,679 |
| $BaTiO_3$ | 10,112 | 9,677 | 9,278 | 8,91 | 8,57 | 8,257 |
| $BaZrO_3$ | 12,359 | 11,828 | 11,34 | 10,891 | 10,48 | 10,092 |
| $Nd_2O_3\text{-}3TiO_2$ | 58,427 | 60,215 | 61,85 | 63,366 | 64,762 | 66,055 |
| $Y_2O_3$ | 1,125 | 1,08 | 1,037 | 0,993 | 0,952 | 0,917 |

TABLEAU II

Le tableau III regroupe les caractéristiques électriques des compositions B à G. Ces caractéristiques sont relevées sous les mêmes conditions que précédemment.

| Composition | B | C | D | E | F | G |
|---|---|---|---|---|---|---|
| $\varepsilon$ | 77,6 | 74,5 | 76 | 76,3 | 75 | 74,3 |
| tg $\delta$ à 1 MHz $(10^{-4})$ | 5 | 5 | 4 | 4 | 6 | 5 |
| $\alpha$ | -54 | -37 | -25 | -4 | +4 | +8 |
| tg $\delta$ à 1 kHz | 9 | 10 | 9 | 9 | 10 | 9 |
| à 100 Hz $(10^{-4})$ | 0 | 10 | 0 | 0 | 10 | 0 |

TABLEAU III

Les variations du coefficient $\alpha$ indiquées dans le tableau III sont principalement dues à la variation du taux de titanate de néodyme. En agissant sur le taux de titanate de néodyme, il est possible d'ajuster le coefficient de température $\alpha$ au voisinage de zéro. Les compositions E, F et G sont particulièrement intéressantes sous ce rapport.

Exemple III

On prépare dans les mêmes conditions que précédemment trois mélanges dont les proportions en poids sont données dans le tableau IV. La caractéristique principale de ce tableau est la variation du taux de zirconate de baryum.

| Composition | H | I | J |
|---|---|---|---|
| $PbTiO_3$ | 11,881 | 12,12 | 12,373 |
| $BaZrO_3$ | 14,851 | 13,13 | 11,34 |
| $BaTiO_3$ | 12,871 | 12,13 | 13,402 |
| $Y_2O_3$ | 0,991 | 1,014 | 1,03 |
| $Nd_2O_3$-$3TiO_2$ | 59,406 | 60,606 | 61,855 |

TABLEAU IV

Le tableau V regroupe les caractéristiques électriques des compositions H, I et J. Ces caractéristiques sont relevées sous les mêmes conditions que précédemment.

**0 262 041**

| Composition | H | I | J |
|---|---|---|---|
| $\varepsilon$ | 74 | 73 | 77 |
| tg $\delta$ à 1MHz $(10^{-4})$ | 5 | 5 | 4 |
| $\alpha$ | -95 | -77 | -53 |

TABLEAU V

Les variations du coefficient de température $\alpha$ indiquées dans le tableau V sont principalement dues à la variation du taux de zirconate de baruym.

Exemple IV

On prépare dans les mêmes conditions que précédemment trois mélanges dont les proportions en poids sont données dans le tableau VI. La caractéristique principale de ce tableau est la variation des taux de titanate de plomb et de titanate de baryum.

| Composition | K | L | M |
|---|---|---|---|
| $PbTiO_3$ | 12,368 | 16,5 | 20,62 |
| $BaTiO_3$ | 13,404 | 9,282 | 5,152 |
| $BaZrO_3$ | 11,335 | 11,335 | 11,335 |
| $Nd_2O_3\text{-}3TiO_2$ | 61,86 | 61,85 | 61,86 |
| $Y_2O_3$ | 1,033 | 1,033 | 1,033 |

TABLEAU VI

Le tableau VII regroupe les caractéristiques électriques des compositions K, L et M. Ces caractéristiques sont relevées sous les mêmes conditions que précédemment.

5

| Composition | K | L | M |
|---|---|---|---|
| $\varepsilon$ | 75 | 75 | 75 |
| tg $\delta$ à 1MHz $(10^{-4})$ | 6 | 4 | 13 |
| $\alpha$ | -57 | -28 | +4 |
| tg $\delta$ à 1kHz | 11 | 11 | 11 |
| à 100Hz $(10^{-4})$ | 10 | 10 | 10 |

## TABLEAU VII

D'après les différents exemples cités et d'après les variations des caractéristiques électriques en fonction des variations des taux de constituants, on peut retenir les compositions comportant en poids :

58 à 70 % de titanate de néodyme
10 à 21 % de titante de plomb
5 à 14 % de titanate de baryum
4 à 15 % de zirconate de baryum
0,2 à 1,2 % d'oxyde d'yttrium.

Une composition présentant un taux de zirconate de baryum de l'ordre de 10,7 % en poids (voir la composition A) est particulièrement intéressante. Un taux d'oxyde d'yttrium de l'ordre de 0,97 % en poids semble être le meilleur choix.

### Revendications

1. Composition diélectrique de type I à base de titanate de néodyme, caractérisée en ce qu'elle est constituée d'un mélange comportant 58 à 70 % en poids de titanate de néodyme, 10 à 21 % en poids de titanate de plomb, 5 à 14 % en poids de titanate de baryum, 4 à 15 % en poids de zirconate de baryum et 0,2 à 1,2 % en poids d'oxyde d'yttrium.

2. Composition diélectrique selon la revendication 1, caractérisée en ce qu'elle comporte 10,7 % en poids de zirconate de baryum.

3. Composition diélectrique selon l'une des revendications 1 ou 2, caractérisée en ce qu'elle comporte 0,97 % en poids d'oxyde d'yttrium.